# EUROPEAN PATENT APPLICATION

(11) **EP 3 163 528 A1**
(43) Date of publication of application: **03.05.2017**
(21) Application number: 15192464.4
(22) Date of filing: 30.10.2015
(51) Int. Cl.: G06Q 20/38, G07F 9/02, G06Q 20/40, G06Q 30/06

(54) **METHODS, DEVICES AND SYSTEMS FOR AUTHORISING AN AGE-RESTRICTED INTERACTION**

(71) Applicant: Mastercard International Incorporated, Purchase NY 10577 (US)
(72) Inventor: MATHÚNA, Daire Mac, Purchase, NY 10577 (US); O'REGAN, Paul, Purchase, NY 10577 (US)
(74) Representative: Lawrence, Richard Anthony

(57) **Abstract**

Methods, a user device and a server system for authorising an age-restricted non-transactional interaction between a user and a provider are disclosed. Transaction account identification data for the user are obtained. The user transaction account identification data are used to access age authentication data associated with a transaction account of the user, and an authorisation for the user is determined by comparing a restricted age value for the interaction with the age authentication data associated with the user transaction account.

## Description

### FIELD OF THE INVENTION

This invention is directed to methods, devices and systems for authorising an age-restricted interaction, in particular for authorising non-transactional interactions, such as proof of minimum age interactions for goods and services.

### BACKGROUND OF THE INVENTION

Various retail and other goods and services are limited or restricted to, or recommended for, certain ages of user, and therefore commonly require some means of verifying the age of a user before a provider will undertake the service, or provide the goods, such as proof of minimum age (PMA). Examples of such age-restricted interactions are the sale of certain goods, such as cigarettes, alcohol and fireworks, the permission of entry to certain premises, or to film theatres for certain showings, and geographic variations on restrictions or recommendations for these and other types of goods and services. For example, a website request may involve content that is not suitable for young people, such as entering an online competition sponsored by an alcohol company.

Proofs of age are known to the art. However, these can be inconvenient for the user, require lengthy or cumbersome verification procedures, or may only be available for certain types of interactions, or to certain users. In addition, determination of minimum age can present significant security, criminal prosecution and/or civil litigation risks to providers of goods or services which should be restricted. Furthermore, previously considered methods of assessing user age have required completely new interaction or transaction infrastructure to be implemented, or have fallen into disuse due to technical deficiencies or excessive technical or computational requirements.

Further still, certain previously considered methods for proving user age have been susceptible to fraud or attack, particularly those related to financial transactions. Taking the above example, a common method to validate a user's minimum age on such websites is to request the user enter the primary account number (PAN) from their credit card. For security reasons, a user may be reluctant to enter a PAN on such a website.

The present invention aims to address these problems and provide improvements upon the known devices and methods.

### STATEMENT OF INVENTION

Aspects and embodiments of the invention are set out in the accompanying claims.

In general terms, one embodiment of a first aspect of the invention can provide a method of authorising an age-restricted non-transactional interaction between a user and a provider, comprising: obtaining transaction account identification data for the user; using the user transaction account identification data to access age authentication data associated with a transaction account of the user; and determining an authorisation for the user by comparing a restricted age value for the interaction with the age authentication data associated with the user transaction account.

This provides a simple means for proving the age of a user, for many different types of user interaction, without being restricted to financial or payment transaction interactions. The method can also use existing transaction network infrastructure for non-transactional interactions, thereby removing the need to implement new infrastructure.

The user transaction account identification data used may be any such transaction account details that can sufficiently identify the user to the means for authenticating their age. For example, the data may be a primary account number (PAN) or a credit card number (real card number (RCN)) or the like. The user may for example be a customer in an interaction with a retailer or goods or services provider, or merchant, who requires a proof of age in order to complete an interaction.

The access of the age authentication data may involve obtaining such data, for example from an issuer, or finding the data in a database. The subsequent determination step can thence verify the age of the user. The age authentication data itself may be a record of the age of the user, linked to the user's account. It may simply be a toggle or trigger to indicate that the user, identified by the user transaction account identification data, has previously been authorised as complying with a given age restriction, or being above a minimum age.

Preferably, the step of using the user transaction account identification data comprises: generating alias transaction account identification data for the user from the user transaction account identification data; and using the alias user transaction account identification data to access the age authentication data.

This provides a potentially highly secure means of proving the age of the user. Since it is the alias data which is used for authorisation/authentication, the actual data of the user need not be submitted for the interaction. For example, a controlled payment number or virtual card number (VCN) can be generated from a user's RCN, so that the VCN instead of the RCN is submitted to access the age authentication data for the authorisation. This means that even if the alias data or VCN is intercepted, the user's main account details can be kept secure.

Preferably, the step of generating comprises: receiving the user transaction account identification data at an issuer; and generating the alias user transaction account identification data for use in authorisation of the non-transactional interaction. The alias data can then be returned to the user (or acquirer, or merchant) for authorisation of the interaction. The issuer may be an issuer bank or financial institution, or a credit card association entity.

Suitably, the step of using the user transaction account identification data to access age authentication data comprises: receiving the user transaction account identification data at an acquirer; using the user transaction account identification data to access a user transaction account record; and retrieving age authentication data from the account record. The acquirer in a transaction network typically receives requests from the merchant, and processes transactions in consultation with the issuer if necessary. Preferably, the user transaction account record is stored at an issuer. The acquirer may be a merchant bank, or payment service provider (PSP), or merchant processor.

Suitably, the steps of using the user transaction account identification data and determining the authorisation comprise: processing a transaction using the user transaction account identification data, wherein a value limit for the transaction is zero.

The processing of the authorisation is therefore undertaken as a transaction, such as a payment transaction, in a transaction network, which allows the existing infrastructure to be used, despite not actually resulting in a transaction itself. In this case, a zero value limit for the transaction is the means of preventing any payment from being processed.

Alternatively, the steps of using the user transaction account identification data and determining the authorisation comprise: processing a transaction using the user transaction account identification data, wherein the step of processing comprises: following determining of the authorisation for the user, aborting the transaction; and using the determined authorisation for the non-transactional interaction. In this case, the transaction is aborted so that no payment is made, but the age authorisation is now available for use in the age-restricted interaction.

One embodiment of a second aspect of the invention can provide a method of authorising an age-restricted non-transactional interaction between a user and a provider, comprising: obtaining transaction account identification data for the user; using the user transaction account identification data to generate a request for access to age authentication data associated with a transaction account of the user; receiving an authorisation for the user determined by comparing a restricted age value for the interaction with the age authentication data associated with the user transaction account; and using the authorisation to process the non-transactional interaction.

One embodiment of a third aspect of the invention can provide a user device for authorising an age-restricted non-transactional interaction between a user and a provider, configured to carry out a method according to the above second aspect of the invention.

One embodiment of a fourth aspect of the invention can provide a server system for authorising an age-restricted non-transactional interaction between a user and a provider, comprising: a transceiver configured to obtain transaction account identification data for the user; a digital storage device configured to store: obtained user transaction account identification data; and age authentication data associated with a transaction account of the user; and at least one processor operable to: use the obtained user transaction account identification data to access the age authentication data of the user; and determine an authorisation for the user by comparing a restricted age value for the interaction with the age authentication data associated with the user transaction account.

One embodiment of a fifth aspect of the invention can provide a method of authorising an age-restricted interaction between a user and a provider, comprising: obtaining transaction account identification data for the user; using the user transaction account identification data to obtain age authentication data associated with a transaction account of the user; and determining an authorisation for the user by comparing a restricted age value for the interaction with the age authentication data associated with the user transaction account.

Further aspects of the invention comprise computer programs or computer program applications comprising computer program code adapted, when loaded into or run on a computer or processor, to cause the computer or processor to carry out a method according to any of the above described aspects.

The above aspects and embodiments may be combined to provide further aspects and embodiments of the invention.

Processors and/or controllers may comprise one or more computational processors, and/or control elements having one or more electronic processors. Uses of the term "processor" or "controller" herein should therefore be considered to refer either to a single processor, controller or control element, or to pluralities of the same; which pluralities may operate in concert to provide the functions described. Furthermore, individual and/or separate functions of the processor(s) or controller(s) may be hosted by or undertaken in different control units, processors or controllers.

To configure a processor or controller, a suitable set of instructions may be provided which, when executed, cause said control unit or computational device to implement the techniques specified herein. The set of instructions may suitably be embedded in said one or more electronic processors. Alternatively, the set of instructions may be provided as software to be executed on said computational device.

### BRIEF DESCRIPTION OF THE DRAWINGS

The invention will now be described by way of example with reference to the accompanying drawings, in which:
Figure 1 is a diagram illustrating steps of a method of authorising an age-restricted non-transactional interaction between a user and a provider, according to an embodiment of the invention;
Figures 2a and 2b are diagrams illustrating the components, structure and functionality of a user device and a server system respectively, according to an embodiment of the invention; and
Figure 3 is a diagram illustrating components of a transaction network used for a method according to an embodiment of the invention.

### DETAILED DESCRIPTION OF EMBODIMENTS

Embodiments of the invention facilitate the authorisation of a user or customer for an age-restricted non-transactional interaction, using their transaction account data, and an existing transaction network and infrastructure. This provides a simple, secure and reliable means for age verification. In embodiments, the authorisation is done using alias user data, such as a virtual card number (VCN), instead of the user's principal account details, such as their primary account number or RCN.

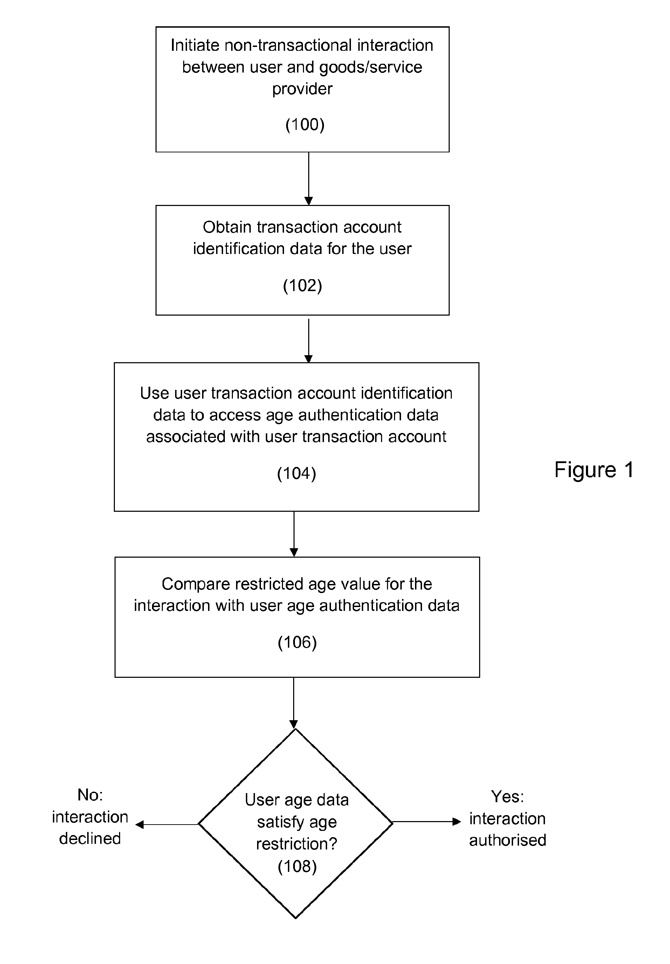

Figure 1 is a diagram illustrating steps of a method of authorising an age-restricted non-transactional interaction between a user and a provider, according to an embodiment of the invention.

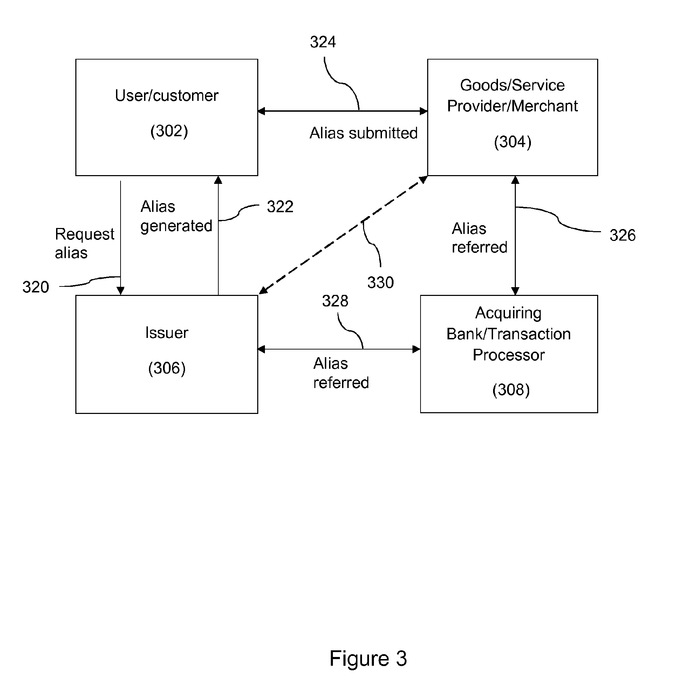

First, the interaction is initiated (100). A non-transactional age-restricted interaction may be of various types, typically requiring a proof of a minimum age before goods or a service can be provided to the user or customer. Other age restrictions may of course be possible, such as a maximum age or a range of ages. An example used in a specific embodiment described later herein with reference to Figure 3 is that of a user attempting to access a website-based competition to win sports tickets, the competition being sponsored by a beer company. The website manager may therefore require that entrants prove a minimum age. Other examples may be the interaction with providers or other alcohol, cigarettes, fireworks and other goods on which age restrictions apply in many jurisdictions. Other such interactions may be requiring minimum age for entry to a licensed premises, or for entry to a film or theatrical presentation.

The interaction may of course be part of or in addition to a transaction, such as a payment or financial transaction. For example, for an alcohol purchase transaction, the user may initially interact with a provider using methods of embodiments of the invention to prove their age, before the payment transaction is undertaken.

Once the interaction is initiated (100), identification data is obtained from the user (102), in order to process the age authentication. In this case, the identification data obtained is transaction account identification data for the user, which allows embodiments of the invention to use pre-existing transactional infrastructure, and knowledge of the user in a transaction network, for a non-transactional purpose: to provide a quick, simple and robust means of verifying the user's age. In embodiments of the invention, the data obtained is a detail of a user account, such as the primary account number (PAN) or a RCN from a credit or payment transaction card. Such data serves to identify the user to the account or card issuer. The issuer has knowledge of the user's age, from details supplied when their account was opened, and can therefore provide a service/goods provider with that knowledge, on receipt of a request.

The data may be obtained from submission of the user's account card, or their account card details. In a physical submission, the user may insert the account card into a point-of-sale (POS) device. Such a POS device could be used at the door of a film theatre, for example. In an online submission, the user can be requested to enter their card details in the usual manner; these can then be passed on to the transaction network.

In an alternative, a computer program application loaded on a user device may be used to provide the user data. For example, a smartphone may be loaded with such an application, which stores the user's account details, and can use the functionality of the smartphone to transmit the user account data to the issuer, and receive authorisation in return.

The details submitted may advantageously be aliased account details, in order to make the interaction more secure. For example, the user may submit a virtual card number (VCN) instead of their RCN. This has the advantage that the use of the VCN generated can be limited in various ways: by amount permitted, period of use, by single, group or type of merchant/service provider, by number of transactions, and the like. This increases security for the user; if the VCN is intercepted, its use is highly limited and therefore fraud is less likely. Though the age authentication is not a financial transaction per se, since it uses the user's financial data, the security advantages of the VCN persist.

Furthermore, use of a VCN as the vehicle for data submission has the advantage that the amount permitted can be limited to zero. This means that essentially a normal transaction can be processed, for the non-transactional purpose of age verification, because no payment will be authorised (as the limit is zero).

Once the user account identification data, such as the user's RCN or VCN, has been obtained, the data can then be used to access age authentication data associated with the user's account (104). Age authentication data for the user held by the issuer can now be accessed or found by submission of the account data/VCN. For example, the normal transactional framework of passing the authorisation (for payment) from the provider, via an acquiring body such as a merchant bank, to the issuer can similarly be used for passing authorisation for the age of the user to the issuer. In embodiments of the invention, this may be done by adding an additional request to a normal transaction authorisation request, that the account details also be used to check the issuer database for age information on the user (in addition to their payment status).

It may of course be possible for another party than the issuer to hold the age verification details; for example this part of the authorisation request may be passed to a third party body authorised by the issuer to store age details for account holders.

The age authentication data itself may be data identifying the age of the user, or it may simply be data that identifies that the user is, or is not, above a threshold age (or below, or within a range), without disclosing the age itself.

Once the age authentication data has been obtained or accessed, it can be compared (106) with the age restriction for the interaction underway. If the age data complies with the age restriction (108), the interaction can be authorised, and if not, declined. For example, once data confirming that a user is over a minimum age is obtained, this can be compared with a minimum age for viewing a film presentation, and authorisation (or decline) provided accordingly.

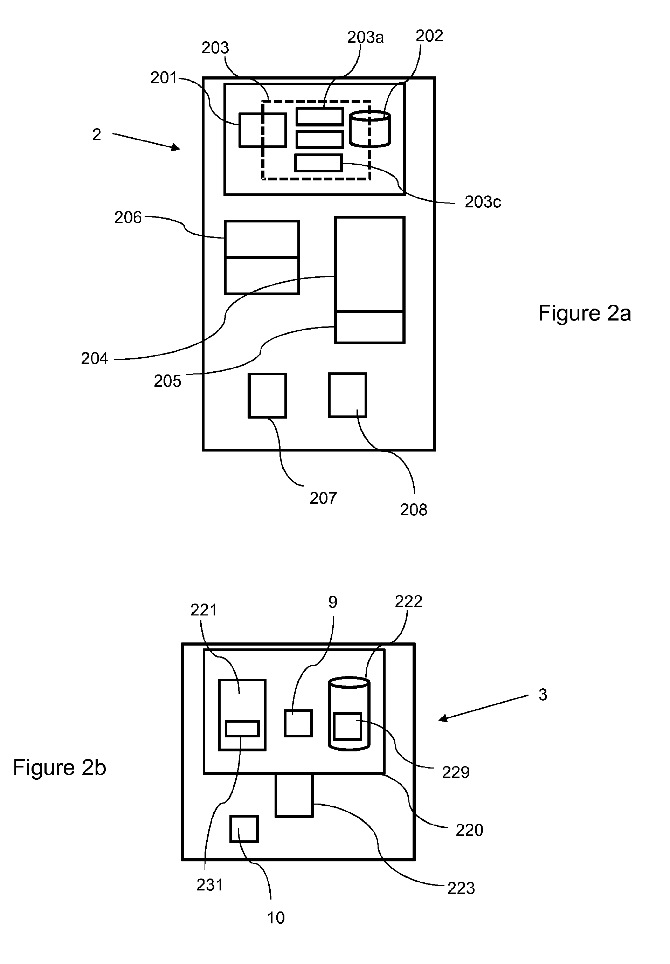

Figures 2a is a diagram illustrating the components, structure and functionality of a user device according to an embodiment of the invention, employed as the means of providing the user account information to the transaction network for age authentication. The user device 2 may be a mobile handset, though it should be noted that any other portable computing apparatus such as a laptop, notebook or tablet computer, or even a fixed apparatus such as a desktop computer, can be used as computing apparatus in embodiments of the invention.

The device comprises a processor 201 and a memory 202, such that the memory stores and the processor will subsequently run applications (shown generally as residing in an application space 203) such as an age authentication application 203a. The device has a user interface comprising a display 204 and a touchscreen 205 (or other input device) and associated drivers to allow a user to enter data into and view information from the applications 203. The device also has a communications capability, such as a SIM 206 and wireless communication element 207 together providing the ability to connect to a cellular communications network; in addition or alternatively the device may include wi-fi or wired network access. The device may need to perform cryptographic operations in order to interact securely with an issuer bank application server 3 (see below).

Figures 2b is a diagram illustrating the components, structure and functionality of a server system (3) according to an embodiment of the invention, which processes the age authentication for the interaction.

The server comprises a processing environment 220 with processor 221 and memory 222, with associated communications functionality 223. The communications functionality may include networking capability allowing communication with a transaction network infrastructure. Alternatively or in addition, a telecommunications capability allows communication over a public network with the user device (2). This communication may be secured. The processor 221 is a representation of processing capability and may in practice be provided by several processors. A user database 10 is provided, storing account details for account holders. The age authentication module 9 is shown as an element within the processing environment 220, with associated user age authentication data 229 stored in the memory 222. Elements shown within the processing environment 220 use the processor 221 and the memory 222 to deliver functionality; for example, these elements can provide steps of embodiments of the invention such as using (104) the user transaction account identification data to access the age authentication data associated with the transaction account of the user; and determining (108) an authorisation for the user by comparing (106) the restricted age value for the interaction with the age authentication data associated with the user transaction account. In embodiments, a cryptographic processor 231 may be used to enable secure communication between the issuing bank application server 3 and the user device 2.

The computing devices noted above in Figures 2a and 2b may include one or more of logic arrays, memories, analogue circuits, digital circuits, software, firmware and processors. The hardware and firmware components of the computing devices may include various specialized units, circuits, software and interfaces for providing the functionality and features described herein. The processor(s) may be or include one or more microprocessors, application specific integrated circuits (ASICs), programmable logic devices (PLDs) and programmable logic arrays (PLAs).

Figure 3 is a diagram illustrating components of a transaction network used for a method according to an embodiment of the invention.

Typically a basic transaction system approached by a user or customer (302), in this case using a payment transaction card, will have a point of interaction controlled by a service provider or merchant 304, a card issuer or issuing bank 306, and a transaction processor or acquirer 308 interconnecting point of interaction 302 and card issuer 306. The merchant's point of interaction generally includes a point of sale device and/or a merchant website, through which authorisation requests are initiated. Interactions between the parts of the network in Figure 3 are indicated by the arrows 320, 322, 324, 326, 328 and 330 linking the blocks representing the above bodies/parties.

In order to carry out a typical transaction, a merchant authorisation request is generated at the merchant's point of interaction (304) which is sent to the transaction processor 308 and forwarded to the card issuer 306 as a request for authorisation. Upon checking a status of the cardholder account (for example, that a card used is valid, that an account has sufficient finance available) the card issuer 306 responds to the transaction processor 308 with an authorisation response, which is then forwarded to the merchant's point of interaction.

Embodiments of the invention can use transaction infrastructure such as this to provide non-transactional interaction age-restriction authentication. In this specific embodiment, the network is used to facilitate PAN-based proof of minimum age (PMA) via the use of aliased user identification data, in this case a special type of VCN - a PMA-VCN. The VCN is a randomly generated PAN linked to the real card number (RCN). The normal use case for a VCN is in the completion of a financial transaction; embodiments of the invention therefore extend the use of VCNs to PMA.

In an embodiment, the process proceeds as follows:
1. User attempts to enter an online competition to win tickets to a sporting event. The competition is sponsored by a beer company. This may be the first interaction between the user and the merchant (324) in the network.
2. The user is requested by the merchant to enter a PAN as a PMA.
3. User generates alias user identification data, here a PMA-VCN, by submitting a request (320) to the issuer and receiving (322) the generated PMA-VCN. This can be done for example through a mobile user device app, or via the card issuer website. Here the PMA-VCN is a special type of VCN that has a $0 transaction limit - no payment can be authorised against it.
4. The user enters the PMA-VCN on the merchant site (324). The PMA-VCN is passed in the normal way (326, 328) in which a standard transaction would be processed, from the merchant to the acquirer, to the issuer in order for the issuer to provide authorisation. Here however, the authorisation being provided is authentication of the age of the user, using the VCN to access the user's account details and verify that they are above the minimum age. The usual payment authorisation is either not processed, or not required, as the payment limit imposed on the VCN for the "transaction" is $0.
5. The authorisation (of the user's age) is passed back to the merchant via the acquirer, and the user is allowed to enter the competition. The website controller is satisfied that the user has provided PMA as they have entered a valid PAN. The user is satisfied from a security point-of-view - firstly, they have not revealed their RCN on the site; secondly, a malicious attack/interception would not be able to initiate a transaction using the PMA-VCN as it has a $0 transaction limit.

In an alternative embodiment, if the VCN cannot or has not been limited to a $0 payment value in this way, the authorisation request can simply include an instruction to abort the transaction at the point at which the authorisation of the user's age has been settled.

The merchant may be able to bypass (330) the acquirer and contact the issuer direct, as the only item to be settled is non-transactional (i.e. the user's age). Certain transactional networks will have such a direct contact ability in place, which may need minimal re-configuration in order to allow the request and return of the age authentication data.

In other embodiments of the invention it is possible that, since the interaction in question is a non-transactional, non-payment interaction (such as proving a minimum age for website access), there are steps in the usual transactional network which could be avoided. For example, there may be steps at which in a normal payment transaction the issuer or some other authority would have to be contacted, for which in methods of embodiments of the invention there is no need for such contact. This may be due to the fact that the age of the user does not change, whereas their status as a valid or authorised payor may vary. Avoiding such steps can allow faster authentication for the user, and of course provide fewer opportunities for the transaction data to be intercepted in transit between parties to the transaction, for malicious or fraudulent attack.

For example, usually for generating a VCN the user (or a device or system prompted by an interaction involving the user) will contact the issuer - the RCN is submitted, and the VCN returned. However, it may be possible for an issuer to provide a user with some means for independently remitting or generating a VCN. For example, the issuer may provide a set of VCNs to a user, for use in such transactions, for example specifically PMA-VCNs limited to zero transactional payment value. In an alternative, the issuer may provide the user with a shared seed or encryption technique for generating VCNs. Such an independent means would allow the user not to have to contact the issuer each time a PMA-VCN had to be generated for a PMA interaction.

It may also be possible, since the interaction is non-payment, for the goods/service provider interacting with the user to avoid having to contact the issuer (or the acquirer). Normally this would of course be required to authorise payment. For example, following an initial transaction with a given provider, in which the age of the user was sought from their transaction account details with the issuer, a provider may store that information in a database associated with the user account details. For a subsequent transaction between the same user (providing the same RCN or PMA-VCN) and provider, the provider can simply use the RCN/PMA-VCN to retrieve the pre-recorded age authentication data for that user, hence without contacting the issuer.

In embodiments of the invention, features described above may be advantageously provided by means of the Applicant's proprietary InControl transaction management system. This systems provides users with the ability to amongst others: track purchases; to receive alerts when an authority (such as a credit card) has been used, for what transaction, when and where; stipulate custom controls on transactions, such as blocking inappropriate transactions; and creating VCNs for enhanced and more secure transactional capabilities. For example, a user may use the InControl system to generate a PMA-VCN for use in a PMA interaction, with the InControl system capping the transaction value at zero.

It will be appreciated by those skilled in the art that the invention has been described by way of example only, and that a variety of alternative approaches may be adopted without departing from the scope of the invention, as defined by the appended claims.

## Claims

1. A method of authorising an age-restricted non-transactional interaction (100) between a user (302) and a provider (304), comprising:
obtaining (102) transaction account identification data for the user;
using (104) the user transaction account identification data to access age authentication data associated with a transaction account of the user; and
determining (108) an authorisation for the user by comparing (106) a restricted age value for the interaction with the age authentication data associated with the user transaction account.

2. A method according to Claim 1, wherein the step of using the user transaction account identification data comprises:
generating (322) alias transaction account identification data for the user from the user transaction account identification data; and
using (324, 326, 328) the alias user transaction account identification data to access the age authentication data.

3. A method according to Claim 2, wherein the step of generating comprises:
receiving (320) the user transaction account identification data at an issuer (306); and
generating the alias user transaction account identification data for use in authorisation of the non-transactional interaction.

4. A method according to any preceding claim, wherein the step of using the user transaction account identification data to access age authentication data comprises: receiving the user transaction account identification data at an acquirer (308); using the user transaction account identification data to access a user transaction account record (306, 328); and retrieving (328) age authentication data from the account record.

5. A method according to Claim 4, wherein the user transaction account record is stored at an issuer.

6. A method according to any of the Claims 1 to 5, wherein the steps of using the user transaction account identification data and determining the authorisation comprise: processing a transaction (324. 326, 328) using the user transaction account identification data, wherein a value limit for the transaction is zero.

7. A method according to any of the Claims 1 to 5, wherein the steps of using the user transaction account identification data and determining the authorisation comprise: processing a transaction using the user transaction account identification data, wherein the step of processing comprises:
following determining of the authorisation (328) for the user, aborting the transaction; and
using (326) the determined authorisation for the non-transactional interaction.

8. A method of authorising an age-restricted non-transactional interaction (100) between a user and a provider, comprising:
obtaining (102) transaction account identification data for the user;
using (104) the user transaction account identification data to generate a request for access to age authentication data associated with a transaction account of the user;
receiving an authorisation (108) for the user determined by comparing (106) a restricted age value for the interaction with the age authentication data associated with the user transaction account; and
using the authorisation to process the non-transactional interaction.

9. A user device (1) for authorising an age-restricted non-transactional interaction (100) between a user (302) and a provider (304), configured to carry out a method according to Claim 8.

10. A server system (3) for authorising an age-restricted non-transactional interaction between a user and a provider, comprising:
a transceiver (223) configured to obtain transaction account identification data for the user;
a digital storage device (10) configured to store: obtained user transaction account identification data; and age authentication data associated with a transaction account of the user; and
at least one processor (220, 221) operable to:
use the obtained user transaction account identification data to access the age authentication data of the user; and
determine an authorisation for the user by comparing a restricted age value for the interaction with the age authentication data associated with the user transaction account.

11. A computer program application comprising computer program code adapted, when loaded into or run on a computer or processor, to cause the computer or processor to carry out a method according to any of the Claims 1 to 8.
